# EUROPÄISCHE PATENTSCHRIFT

(11) **EP 2 819 896 B1**
(45) Veröffentlichungstag und Bekanntmachung des Hinweises auf die Patenterteilung: **08.08.2018**
(21) Anmeldenummer: 13701234.0
(22) Anmeldetag: 18.01.2013
(51) Int. Cl.: B60T 7/10, B60T 8/171, B60T 8/172, B60T 8/1755, B60T 8/24, B60T 13/74, F16D 65/16, F16D 66/02

(54) **VERFAHREN ZUM BEREITSTELLEN DER VON EINER FESTSTELLBREMSE ERZEUGTEN KLEMMKRAFT**
METHOD FOR PROVIDING THE CLAMPING FORCE GENERATED BY A PARKING BRAKE
PROCÉDÉ DE MISE À DISPOSITION D'UNE FORCE DE SERRAGE EXERCÉE PAR UN FREIN DE STATIONNEMENT

(30) Priorität: 27.02.2012 DE 102012202959
(43) Veröffentlichungstag der Anmeldung: 07.01.2015
(73) Patentinhaber: Robert Bosch GmbH, 70442 Stuttgart (DE)
(72) Erfinder: BAEHRLE-MILLER, Frank, 71101 Schoenaich (DE); BLATTERT, Dieter, 74366 Kirchheim/Neckar (DE); PUTZER, Tobias, 74177 Bad Friedrichshall (DE)
(86) Internationale Anmeldenummer: PCT/EP2013/050897
(87) Internationale Veröffentlichungsnummer: WO 2013/127560

(56) Entgegenhaltungen:
- WO-A1-99/26829
- WO-A1-2009/033990
- DE-A1- 10 021 601
- DE-A1-102004 059 688
- DE-A1-102009 047 127
- DE-B3- 10 361 042
- DE-C1- 19 732 168
- US-A1- 2004 238 299

## Beschreibung

Die Erfindung bezieht sich auf ein Verfahren zum Bereitstellen der von einer Feststellbremse erzeugten Klemmkraft in einem Fahrzeug.

### Stand der Technik

Bekannt sind Feststellbremsen zum Erzeugen einer das Fahrzeug festsetzenden Klemmkraft mit einem elektrischen Bremsmotor, bei dessen Betätigung ein Bremskolben, welcher Träger eines Bremsbelages ist, gegen eine Bremsscheibe gedrückt wird. Eine derartige Feststellbremse wird beispielsweise in der DE 103 61 042 B3 beschrieben.

Unter bestimmten Voraussetzungen kann es zweckmäßig sein, nach dem ersten Zuspannvorgang der Feststellbremse in zeitlichem Abstand einen Nachspannvorgang durchzuführen, um einen Klemmkraftverlust zu kompensieren, der durch Abkühlen der Bremsscheibe entsteht. Zu berücksichtigen ist hierbei jedoch, dass die hydraulische Fahrzeugbremse ebenfalls auf den Bremskolben wirkt, so dass für den Fall, dass ein Hydraulikdruck im Bremssystem wirksam ist, eine Superposition der elektromechanisch gestellten Klemmkraft und einer hydraulischen Klemmkraft erfolgt.

Aus der WO 2009/033990 A1 ist ein Bremssystem bekannt, das eine hydraulische Fahrzeugbremse sowie eine elektromechanisch betätigbare Feststellbremse mit einem Bremsmotor umfasst, um das Fahrzeug im Stillstand festzusetzen. Bei dieser Fahrzeugbremse addiert sich die Gesamtklemmkraft durch Superposition von hydraulischer Bremskraft und elektromechanisch erzeugter Klemmkraft. Auch de Druckschriften DE 10 2009 047 127 A1 und DE 197 32 168 C1 zeigen jeweils eine hydraulische Fahrzeugbremse sowie eine elektromechanische Feststellbremse.

Die DE 100 21 601 A1 betrifft eine Feststellbremseinrichtung mit einem elektrischen Bremsmotor zum Erzeugen einer Klemmkraft, um das Fahrzeug im Stillstand festzusetzen. Um ein thermomechanisch bedingtes Nachlassen der Klemmkraft zu kompensieren, wird die Feststellbremse nach erfolgter Zuspannung hinsichtlich ihrer Klemmwirkung überwacht und ggf. automatisch nachgespannt. Auch die Druckschriften US 2004/0238299 A1, DE 10 2004 059 688 A1 und WO 99/26829 A1 beziehen sich jeweils auf eine elektromechanische Feststellbremse.

### Offenbarung der Erfindung

Der Erfindung liegt die Aufgabe zugrunde, mit einfachen Maßnahmen eine ordnungsgemäße Funktion und hohe Betriebssicherheit einer Feststellbremse für ein Fahrzeug, die mit einem elektrischen Bremsmotor zum Erzeugen einer elektromechanischen Klemmkraft ausgestattet ist, zu gewährleisten.

Diese Aufgabe wird erfindungsgemäß mit den Merkmalen des Anspruches 1 gelöst. Die Unteransprüche geben zweckmäßige Weiterbildungen an.

Das erfindungsgemäße Verfahren kann bei Feststellbremsen in Fahrzeugen eingesetzt werden, die eine elektromechanische Bremsvorrichtung mit einem elektrischen Bremsmotor aufweisen, über den eine Klemmkraft zum Festsetzen des Fahrzeugs im Stillstand erzeugbar ist. Bei einer Rotationsbewegung des elektrischen Bremsmotors führt ein Stellglied eine Stellbewegung aus, über die ein Bremskolben, welcher Träger eines Bremsbelages ist, axial gegen eine Bremsscheibe gedrückt wird.

Auf die Bremsscheibe kann gegebenenfalls eine Zusatzbremseinrichtung wirken, beispielsweise der hydraulische Druck einer hydraulischen Bremseinrichtung, bei der es sich beispielsweise um die reguläre Fahrzeugbremse handelt, über die während der Fahrt des Fahrzeuges Bremsvorgänge durchgeführt werden. Über den hydraulischen Druck der Bremseinrichtung wird der Bremskolben, der Träger des Bremsbelages ist, gegen die Bremsscheibe gedrückt. Der hydraulische Druck der Bremseinrichtung kann auch im Stillstand des Fahrzeuges wirksam sein und zu einer Zusatzklemmkraft führen, welche sich zu der elektromechanischen Klemmkraft des Bremsmotors addiert. Der hydraulische Druck entsteht beispielsweise dadurch, dass der Fahrer bei Betätigung der Feststellbremse das Bremspedal beaufschlagt oder dass über ein Fahrerassistenzsystem, beispielsweise ein elektronisches Stabilitätsprogramm (ESP) ein Hydraulikdruck generiert wird, der auch im Moment der Betätigung des elektrischen Bremsmotors der Feststellbremse wirksam ist.

Wenn ein Nachspannvorgang durch erneutes Betätigen des elektrischen Bremsmotors durchgeführt werden soll und bereits ein hoher hydraulischer Bremsdruck anliegt, so kann die Soll-Klemmkraft von dem elektrischen Bremsmotor nicht erreicht werden, da diese nicht beliebig gegen ein vorgespanntes System anlaufen kann. Durch die Superposition von hydraulischer Klemmkraft und elektromechanischer Klemmkraft ist die bereitgestellte Endkraft höher als bei alleiniger Betätigung des elektrischen Bremsmotors. Wird dennoch während des Nachspannvorganges der Bremsmotor betätigt, obwohl die Klemmkraft nicht weiter erhöht werden kann, so führt dies zu einer hohen Komponentenbelastung insbesondere im Bremsmotor sowie der Ansteuerungselektronik im Steuergerät, das dem Bremsmotor zugeordnet ist. Außerdem wird dem Bordnetz im Fahrzeug mehr elektrischer Energie entnommen als erforderlich ist.

Um diese Nachteile zu vermeiden, wird ein Nachspannvorgang, bei dem der elektrische Bremsmotor der Feststellbremse im Anschluss an einen ersten Zuspannvorgang nochmals betätigt wird, abgebrochen, wenn der Motorstrom bzw. eine mit dem Motorstrom korrelierende Größe einen zugeordneten Grenzwert überschreitet. Ein starker Anstieg des Motorstroms während des Nachspannvorganges deutet daraufhin, dass der Bremskolben keinen weiteren Weg zurücklegt und der elektrische Bremsmotor blockiert. Um mechanische und thermische Schädigungen und eine hohe Energieentnahme aus dem Bordnetz zu vermeiden, wird daher der elektrische Bremsmotor abgeschaltet, wenn während des Nachspannvorganges der Motorstrom einen zugeordneten Grenzwert übersteigt. Anstelle des Motorstroms kommen auch mit dem Motorstrom korrelierende Größen in Betracht.

Zusätzlich oder alternativ kann als Kriterium für das Abschalten auch die Motordrehzahl bzw. eine mit der Motordrehzahl korrelierende Größe betrachtet werden. Bei einem Blockieren des elektrischen Bremsmotors unterschreitet die Motordrehzahl einen zugeordneten Schwellenwert; ist dies der Fall, wird der Motor abgeschaltet.

Die genannten Kriterien werden zweckmäßigerweise alternativ betrachtet, so dass der Bremsmotor während des Nachspannvorganges abgeschaltet wird, sobald eines der Kriterien erfüllt ist.

Zusätzlich kann auch noch das weitere Abschaltkriterium berücksichtigt werden, dass der Nachspannvorgang abgebrochen wird, falls der vom Bremskolben zurückgelegte Nachspannweg einen zugeordneten Grenzwert überschreitet. Der dem Nachspannweg zugeordnete Grenzwert kann auf einen festen Wert gesetzt werden, beispielsweise auf 200 µm. Falls der Nachspannweg zuerst den Grenzwert überschreitet, also noch bevor der Motorstrom oder die Drehzahl den jeweils zugeordneten Grenzwert erreicht, wird der Nachspannvorgang ebenfalls abgebrochen.

Der dem Motorstrom zugeordnete Grenzwert wird beispielsweise auf den Einschaltstrompeak gesetzt, welcher beim Einschalten des elektrischen Bremsmotors entsteht. Hierbei kann entweder ein gerätetypischer Einschaltstrompeak verwendet werden oder der Einschaltstrompeak aus einem aktuellen Zuspannvorgang, insbesondere während des Nachspannvorganges.

Gemäß einer weiteren zweckmäßigen Ausführung ist vorgesehen, dass ein Fehlersignal für den Fall erzeugt wird, dass die geforderte Soll-Klemmkraft nicht allein über den elektrischen Bremsmotor erzeugt werden kann und zugleich keine ausreichende hydraulische Unterstützung über die Fahrzeugbremse erfolgt. Kann beim Nachspannen die Soll-Klemmkraft nicht vom Bremsmotor gestellt werden, ist es erforderlich, dass die Klemmkraftdifferenz über den hydraulischen Bremsdruck erzeugt wird. Falls kein hydraulischer Bremsdruck anliegt bzw. dieser nicht ausreicht, wird ein Fehlersignal erzeugt, das in geeigneter Weise weiterverarbeitet werden kann, beispielsweise dem Fahrer zur Anzeige gebracht werden kann.

Des Weiteren kann es zweckmäßig sein, den Nachspannvorgang in Abhängigkeit der Bremsscheibentemperatur durchzuführen. Insbesondere bei länger andauernden Bremsvorgängen während der Fahrt des Fahrzeuges kann die Bremsscheibentemperatur erheblich ansteigen und schließlich zu einer Durchwärmung der Bremsscheibe führen, bei der über die axiale Dicke der Bremsscheibe eine zumindest annähernd gleiche Temperatur herrscht. Falls bei heißer und durcherwärmter Bremsscheibe nach dem Abstellen des Fahrzeuges die Feststellbremse betätigt und über den elektrischen Bremsmotor zugespannt wird, kann bei der anschließenden Abkühlung der Bremsscheibe durch das thermisch bedingte Zusammenziehen ein Klemmkraftverlust auftreten, welcher über den Nachspannvorgang wieder kompensiert wird. Soweit Informationen über die Bremsscheibentemperatur vorliegen, kann der Nachspannvorgang von der Bremsscheibentemperatur beeinflusst sein, beispielsweise dergestalt, dass die Zeitspanne zwischen dem ersten Zuspannen über den elektrischen Bremsmotor und dem Nachspannvorgang variabel von der Bremsscheibentemperatur bestimmt wird oder die Entscheidung, ob nachgespannt wird, von der Bremsscheibentemperatur abhängt.

Um sicherzustellen, dass ein ausreichender Hydraulikdruck gestellt werden kann, wird zweckmäßigerweise während des Nachspannvorgangs der Hydraulikdruck überwacht, beispielsweise in einem ESP-Steuergerät oder durch Auswerten einer aktuellen elektrischen oder mechanischen Zustandsgröße des Bremsmotors, beispielsweise des Motorstroms, wobei von einem nicht ausreichenden Hydraulikdruck ausgegangen werden kann, falls der Gradient des Motorstroms des elektrischen Bremsmotors einen zugeordneten Grenzwert überschreitet.

Das erfindungsgemäße Verfahren läuft in einem Regel- bzw. Steuergerät im Fahrzeug ab, das Bestandteil der Feststellbremse sein kann.

Weitere Vorteile und zweckmäßige Ausführungen sind den weiteren Ansprüchen, der Figurenbeschreibung und den Zeichnungen zu entnehmen. Es zeigen:
- Fig. 1: einen Schnitt durch eine elektromechanische Feststellbremse für ein Fahrzeug, mit einem elektrischen Bremsmotor zur Erzeugung einer das Fahrzeug festsetzenden Klemmkraft,
- Fig. 2: den zeitlichen Verlauf verschiedener Zustandsgrößen der Feststellbremse bei einem Zuspannvorgang der Feststellbremse,
- Fig. 3: den zeitlichen Verlauf verschiedener Zustandsgrößen der Feststellbremse bei einem Nachspannvorgang der Feststellbremse, wobei die geforderte Soll-Klemmkraft nicht erreicht wird,
- Fig. 4: ein Ablaufdiagramm mit Verfahrensschritten zur Bereitstellung der das Fahrzeug im Stillstand festsetzenden Klemmkraft durch die Feststellbremse mit Unterstützung durch den Hydraulikdruck der Fahrzeugbremse.

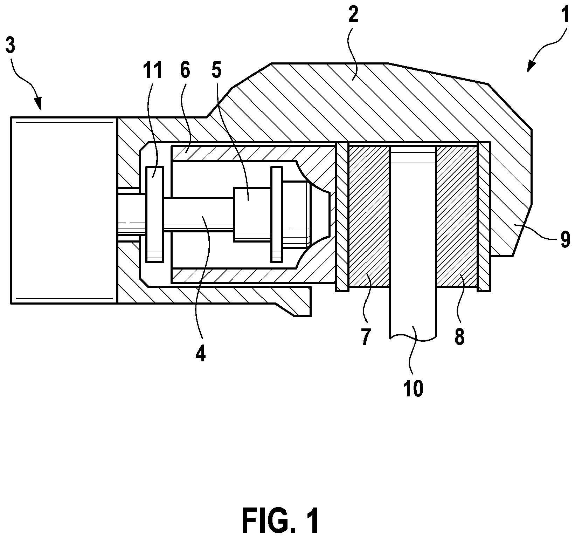

Fig. 1 zeigt eine elektromechanische Feststellbremse 1 in einem Fahrzeug, wobei über die Feststellbremse eine das Fahrzeug im Stillstand festsetzende Klemmkraft erzeugbar ist. Die Feststellbremse 1 weist einen Bremssattel 2 mit einer Zange 9 auf, welche eine Bremsscheibe 10 übergreift. Als Stellglied der Feststellbremse 1 fungiert ein als Elektromotor ausgeführter Bremsmotor 3, der eine Spindel 4 rotierend antreibt, auf der ein Spindelbauteil 5 axial verstellbar und gegenüber dem Gehäuse rotationsfest gelagert ist. Das Spindelbauteil 5 wird axial verstellt, wenn die Spindel 4 rotiert. Das Spindelbauteil 5 bewegt sich innerhalb eines Bremskolbens 6, der Träger eines Bremsbelages 7 ist, welcher von dem Bremskolben 6 gegen die Bremsscheibe 10 gedrückt wird. Auf der gegenüberliegenden Seite der Bremsscheibe 10 ist ein weiterer Bremsbelag 8 angeordnet, der ortsfest an der Zange 9 gehalten ist.

Das Spindelbauteil 5 kann sich innerhalb des Bremskolbens 6 im Falle einer Drehbewegung der Spindel 4 axial nach vorne in Richtung auf die Bremsscheibe zu bzw. bei einer entgegengesetzten Drehbewegung der Spindel 4 axial nach hinten bis zum Erreichen eines Anschlags 11 bewegen. Um eine gewünschte Soll-Klemmkraft zu erzeugen, beaufschlagt das Spindelbauteil 5 die innere Stirnseite des Bremskolbens 6, so dass der axial in der Feststellbremse 1 verschieblich gelagerte Bremskolben 6 mit dem Bremsbelag 7 gegen die zugewandte Stirnfläche der Bremsscheibe 10 gedrückt wird.

Auf den Bremskolben wirkt außerdem der hydraulische Druck der regulären, hydraulischen Fahrzeugbremse, mit der das Fahrzeug während der Fahrt abgebremst wird. Der hydraulische Druck kann aber auch im Fahrzeugstillstand bei Betätigung der Feststellbremse unterstützend wirksam sein, so dass sich die Gesamt-Klemmkraft aus dem elektromotorisch gestellten Anteil und dem hydraulischen Anteil zusammensetzt.

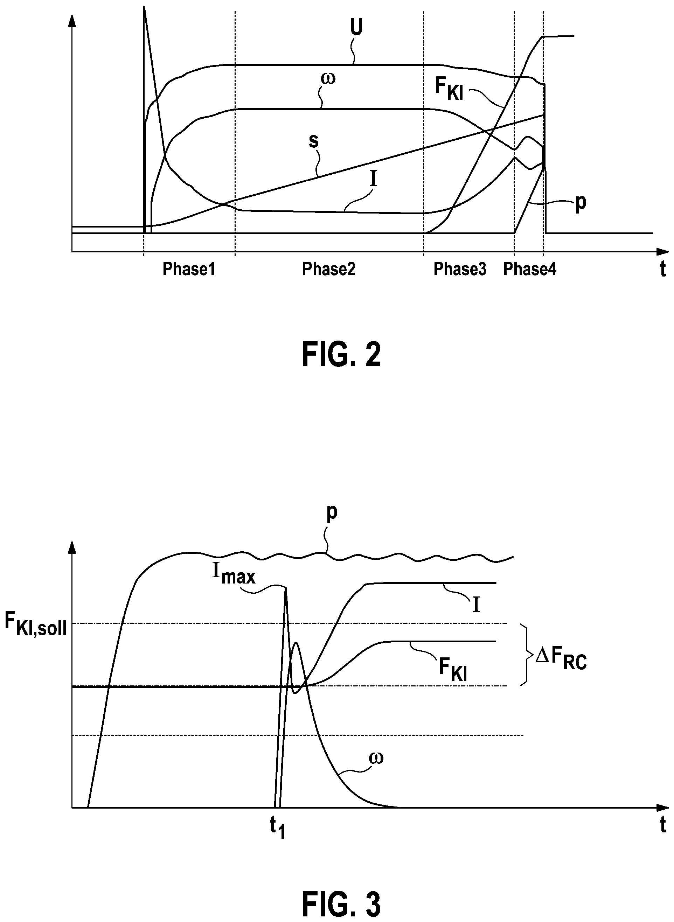

In Fig. 2 ist ein Schaubild mit dem Stromverlauf I, der Spannung U, dem Drehzahlverlauf n des elektrischen Bremsmotors, dem Stellweg s des Spindelbauteils 5, der erzeugten Klemmkraft F_{Kl} sowie dem Hydraulikdruck p zeitabhängig für einen Zuspannvorgang dargestellt. Am Anfang von Phase 1 beginnt der Zuspannvorgang, indem eine elektrische Spannung aufgebracht und der Bremsmotor bei geschlossenem Stromkreis unter Strom gesetzt wird. Am Ende von Phase 1 haben die Spannung U und die Motordrehzahl n ihr Maximum erreicht. Die Phase 2 stellt die Leerlaufphase dar, in welcher der Strom I sich auf einem Minimumniveau bewegt. Daran schließt sich die Kraftaufbauphase 3 mit ansteigender elektromechanischer Klemmkraft an, in der die Bremsbeläge an der Bremsscheibe anliegen und mit zunehmender Klemmkraft gegen die Bremsscheibe gedrückt werden.

In der Phase 4 wirkt zusätzlich der hydraulische Druck p der Fahrzeugbremse auf den Bremskolben, so dass die gesamte Klemmkraft F_{Kl} sich aus dem vom elektrischen Bremsmotor gestellten Klemmkraftanteil und dem hydraulischen Anteil additiv zusammensetzt. Am Ende von Phase 4 erfolgt das Abschalten des elektrischen Bremsmotors durch Öffnen des Stromkreises, außerdem wird der Pumpenmotor der hydraulischen Fahrzeugbremse abgeschaltet. Demzufolge fallen der hydraulische Druck p, der Strom I, die Spannung U und die Drehzahl ω des Bremsmotors 3 auf Null. Die Gesamt-Klemmkraft F_{Kl} wird dabei gehalten.

In Fig. 3 sind die Signalverläufe der Zustandsgrößen während eines Nachspannvorganges dargestellt, welcher sich an den ersten Zuspannvorgang in zeitlichem Abstand anschließt, um beispielsweise ein Nachlassen der Klemmkraft aufgrund der Abkühlung der Bremsscheibe zu kompensieren. Bereits vor dem Einschalten des elektrischen Bremsmotors wirkt der hydraulische Druck p, der auf annähernd konstantem Niveau gehalten wird. Zum Zeitpunkt t₁ wird der elektrische Bremsmotor eingeschaltet, woraufhin der Motorstrom I auf einen Einschaltstrompeak Iₘₐₓ ansteigt. Wie bereits bei Fig. 2 beschrieben, sinkt der Motorstrom I anschließend wieder ab und steigt erneut an, wenn Getriebespiel einer den Bremsmotor umfassenden Motor-Getriebe-Einheit überwunden ist und die Bremsbeläge gegen die Bremsscheibe gedrückt werden.

Im Nachspannvorgang soll die zusätzliche Klemmkraft ΔF_{RC} erzeugt werden. Im Ausführungsbeispiel gemäß Fig. 3 erreicht jedoch die Gesamt-Klemmkraft F_{Kl}, welche sich aus dem elektromotorischen Anteil und dem hydraulischen Anteil zusammensetzt, nicht die Zielklemmkraft F_{Kl},ₛₒₗₗ. Dies ist jedoch unkritisch, solange gewährleistet ist, dass die tatsächliche Klemmkraft F_{Kl} höher ist als die für das Festsetzen des Fahrzeugs erforderliche Klemmkraft.

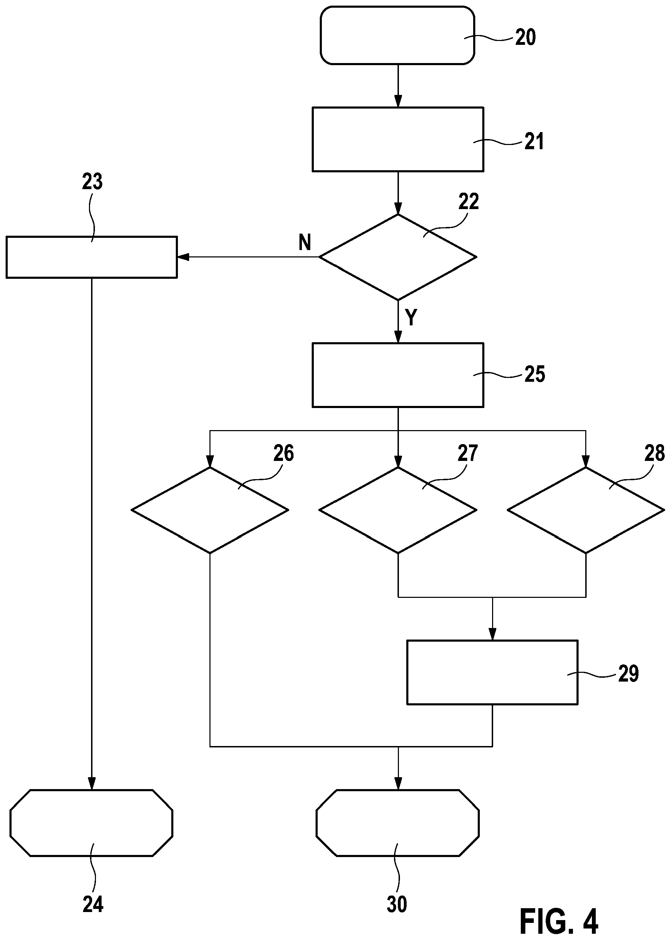

In Fig. 4 ist ein Ablaufdiagramm mit Verfahrensschritten zur Bereitstellung einer Klemmkraft durch die Feststellbremse mit Unterstützung durch den Hydraulikdruck der Fahrzeugbremse dargestellt. Zunächst wird in einem ersten Verfahrensschritt 20 die Höhe der Soll-Klemmkraft sowie der zusätzlichen Klemmkraft festgelegt, welche im Nachspannvorgang zusätzlich aufgebracht werden soll. Der nächste Verfahrensschritt 21 kennzeichnet den ersten Zuspannvorgang zum Aufbringen der Soll-Klemmkraft, die durch den elektrischen Bremsmotor mit Unterstützung durch den Hydraulikdruck der Fahrzeugbremse eingestellt wird.

Die folgenden Verfahrensschritte kennzeichnen den Nachspannvorgang, welcher sich in einem definierten zeitlichen Abstand an den ersten Zuspannvorgang anschließt. Der Nachspannvorgang wird beispielsweise durchgeführt, wenn die Neigung der Straße, auf der das Fahrzeug abgestellt ist, einen Grenzwert übersteigt. Möglich ist auch die Durchführung des Nachspannvorganges, wenn die Bremsscheibentemperatur oberhalb eines Schwellenwertes liegt.

Im Verfahrensschritt 22 wird abgefragt, ob im ersten Zuspannvorgang die geforderte Soll-Klemmkraft erreicht worden ist und vom Hydrauliksystem Druck bereitgestellt werden kann. Ist eine dieser Bedingungen nicht erfüllt, wird der Nein-Verzweigung ("N") folgend zum Verfahrensschritt 23 fortgefahren und ein Fehlersignal erzeugt, mit dem beispielsweise der Fahrer informiert wird. Anschließend wird zum Verfahrensschritt 24 fortgefahren, das Verfahren ist beendet. Der Grund für das Fehlersignal liegt darin, dass im Ausführungsbeispiel die geforderte Soll-Klemmkraft nicht allein über den elektrischen Bremsmotor gestellt werden kann, so dass eine hydraulische Unterstützung zwingend erforderlich ist.

Sind die in Verfahrensschritt 22 abgefragten Kriterien beide erfüllt, wird der Ja-Verzweigung ("Y") folgend zum Verfahrensschritt 25 fortgefahren, gemäß dem der Nachspannvorgang durch erneutes Zuspannen des elektrischen Bremsmotors begonnen wird. Der Nachspannvorgang wird so lange durchgeführt, bis eine der in den Verfahrensschritten 26, 27 und 28 formulierten Abschaltbedingungen erfüllt ist, die während des Nachspannvorgangs laufend abgefragt werden.

Gemäß Verfahrensschritt 26 wird der elektrische Bremsmotor abgeschaltet, wenn der vom Bremskolben zurückgelegte Nachspannweg einen zugeordneten Grenzwert überschreitet. Der Bremskolben wird von dem elektrischen Bremsmotor verstellt.

Gemäß Verfahrensschritt 27 erfolgt die Abschaltung des Bremsmotors, wenn der Motorstrom I einen zugeordneten Grenzwert übersteigt. Dieser Grenzwert für den Motorstrom kann beispielsweise auf den Einschaltstrompeak Iₘₐₓ (Fig. 3) gesetzt werden. Es kann beispielsweise beim aktuell laufenden Nachspannvorgang der Einschaltstrompeak Iₘₐₓ bestimmt und als Grenzwert herangezogen werden.

Gemäß Verfahrensschritt 28 erfolgt die Abschaltung des Bremsmotors, wenn die Motordrehzahl ω einen zugeordneten Grenzwert unterschreitet. In diesem Fall ist eine weitere Bewegung des Bremsmotors nicht möglich, es droht ein Blockieren, wodurch die mechanischen und elektrischen Komponenten zusätzlich belastet würden.

Wird der Nachspannvorgang abgebrochen, wenn die Bedingung im Verfahrensschritt 26 vorliegt, also ein definierter Bremsweg von dem vom Bremsmotor beaufschlagten Stellglied zurückgelegt worden ist, wird zum Verfahrensschritt 30 fortgefahren und das Verfahren beendet. Wenn dagegen eine der Abschaltbedingungen 27 bzw. 28 erfüllt ist, wird zum Verfahrensschritt 29 vorgerückt und eine verlängerte Nachlaufzeit des Regel- bzw. Steuergeräts des Bremsmotors angefordert. Das Steuergerät bleibt dadurch länger aktiv und kann über Raddrehzahlfühler die Fahrzeugbewegung überwachen. Beim Vorliegen eines Raddrehsignals kann auf ein Wegrollen des Fahrzeugs geschlossen werden, woraufhin ein erneuter Nachspannvorgang ausgelöst wird. Erst wenn während der erweiterten Nachlaufzeit kein Wegrollen des Fahrzeugs detektiert wird, wird das Steuergerät abgeschaltet.

Im Anschluss an Verfahrensschritt 29 wird zum Verfahrensschritt 30 vorgerückt, das Verfahren ist beendet.

## Patentansprüche

1. Verfahren zum Bereitstellen der von einer Feststellbremse (1) in einem Fahrzeug erzeugten Klemmkraft (F_{Kl}), die zumindest teilweise von einer elektromechanischen Bremsvorrichtung mit einem elektrischen Bremsmotor (3) erzeugt wird, welcher einen Bremskolben (6) gegen eine Bremsscheibe (10) beaufschlagt, wobei über eine hydraulische Bremseinrichtung eine hydraulische Zusatzklemmkraft erzeugbar ist, **dadurch gekennzeichnet, dass** ein Nachspannvorgang, der bei hydraulischer Zusatzklemmkraft durchgeführt wird und bei dem der elektrische Bremsmotor (3) im Anschluss an einen ersten Zuspannvorgang nochmals betätigt wird, abgebrochen wird, wenn der Motorstrom bzw. eine mit dem Motorstrom korrelierende Größe einen zugeordneten Grenzwert überschreitet bzw. die Motordrehzahl bzw. eine mit der Motordrehzahl korrelierende Größe einen zugeordneten Grenzwert unterschreitet.

2. Verfahren nach Anspruch 1, **dadurch gekennzeichnet, dass** der Nachspannvorgang abgebrochen wird, wenn der vom Bremskolben (6) zurückgelegte Nachspannweg einen zugeordneten Grenzwert überschreitet.

3. Verfahren nach Anspruch 1 oder 2, **dadurch gekennzeichnet, dass** der dem Motorstrom zugeordnete Grenzwert dem Einschaltstrompeak beim Einschalten des Bremsmotors (3) entspricht.

4. Verfahren nach Anspruch 3, **dadurch gekennzeichnet, dass** der dem Motorstrom zugeordnete Grenzwert dem Einschaltstrompeak beim Nachspannvorgang entspricht.

5. Verfahren nach einem der Ansprüche 1 bis 4, **dadurch gekennzeichnet, dass** ein Fehlersignal erzeugt wird, falls die geforderte Soll-Klemmkraft nicht allein über den elektrischen Bremsmotor (3) erzeugt werden kann und keine oder keine ausreichende Zusatzklemmkraft vorliegt.

6. Verfahren nach Anspruch 5, **dadurch gekennzeichnet, dass** die Überwachung des Hydraulikdrucks in einem ESP-Steuergerät (Elektronisches Stabilitätsprogramm) durchgeführt wird.

7. Verfahren nach Anspruch 5 oder 6, **dadurch gekennzeichnet, dass** die Überwachung des Hydraulikdrucks während des Nachspannvorgangs durchgeführt wird.

8. Verfahren nach Anspruch 7, **dadurch gekennzeichnet, dass** kein bzw. ein nicht ausreichender Hydraulikdruck vorliegt, wenn der Gradient des Motorstroms des elektrischen Bremsmotors (3) einen zugeordneten Grenzwert überschreitet.

9. Verfahren nach einem der Ansprüche 1 bis 8, **dadurch gekennzeichnet, dass** der Nachspannvorgang in Abhängigkeit der Bremsscheibentemperatur durchgeführt wird.

10. Verfahren nach einem der Ansprüche 1 bis 9, **dadurch gekennzeichnet, dass** nach Beendigung eines Zuspannvorgangs die Fahrzeugbewegung für eine definierte Zeitspanne überwacht und beim Wegrollen des Fahrzeugs ein Nachspannvorgang ausgelöst wird.

11. Regel- bzw. Steuergerät zur Durchführung des Verfahrens nach einem der Ansprüche 1 bis 10.

12. Feststellbremse in einem Fahrzeug mit einem Regel- bzw. Steuergerät nach Anspruch 11.

## Claims

1. Method for providing the clamping force (F_{Kl}) generated by a parking brake (1) in a vehicle, which force is at least partly generated by an electromechanical braking device with an electric brake motor (3) which loads a brake piston (6) against a brake disc (10), it being possible for an additional hydraulic clamping force to be generated via a hydraulic braking unit, **characterized in that** a re-tightening operation, which is carried out with an additional hydraulic clamping force and in which the electric brake motor (3) is actuated once more following a first application operation, is interrupted when the motor current or a variable correlating with the motor current exceeds an associated limiting value and/or the motor rotational speed or a variable correlating with the motor rotational speed falls below an associated limiting value.

2. Method according to Claim 1, **characterized in that** the re-tightening operation is interrupted when the re-tightening travel covered by the brake piston (6) exceeds an associated limiting value.

3. Method according to Claim 1 or 2, **characterized in that** the limiting value assigned to the motor current corresponds to the peak inrush current when switching on the brake motor (3).

4. Method according to Claim 3, **characterized in that** the limiting value assigned to the motor current corresponds to the peak inrush current during the re-tightening operation.

5. Method according to one of Claims 1 to 4, **characterized in that** an error signal is generated if the required target clamping force cannot be generated solely by the electric brake motor (3) and there is no or no adequate additional clamping force.

6. Method according to Claim 5, **characterized in that** the monitoring of the hydraulic pressure is carried out in an ESP control device (Electronic Stability Program).

7. Method according to Claim 5 or 6, **characterized in that** the monitoring of the hydraulic pressure is carried out during the re-tightening operation.

8. Method according to Claim 7, **characterized in that** there is no or no adequate hydraulic pressure when the gradient of the motor current of the electric brake motor (3) exceeds an associated limiting value.

9. Method according to one of Claims 1 to 8, **characterized in that** the re-tightening operation is carried out depending on the brake disc temperature.

10. Method according to one of Claims 1 to 9, **characterized in that** after an application operation has been completed, the vehicle movement is monitored for a defined time interval and, if the vehicle rolls away, a re-tightening operation is triggered.

11. Closed-loop or open-loop control device for carrying out the method according to one of Claims 1 to 10.

12. Parking brake in a vehicle with a closed-loop or open-loop control device according to Claim 11.

## Revendications

1. Procédé de mise à disposition de la force de serrage (Fₖₗ) exercée par un frein de stationnement (1) dans un véhicule, qui est produite au moins en partie par un dispositif de freinage électromécanique avec un moteur de frein électrique (3), qui entraîne un piston de frein (6) contre un disque de frein (10), dans lequel une force de serrage hydraulique additionnelle peut être produite par un dispositif de freinage hydraulique, **caractérisé en ce que** l'on interrompt une opération de re-serrage, qui est effectuée avec la force de serrage hydraulique additionnelle et dans laquelle le moteur de frein électrique (3) est à nouveau actionné à la suite d'une première opération de serrage, lorsque le courant du moteur ou une grandeur corrélée avec le courant du moteur dépasse une valeur limite associée ou lorsque le nombre de tours du moteur ou une grandeur corrélée avec le nombre de tours du moteur tombe sous une valeur limite associée.

2. Procédé selon la revendication 1, **caractérisé en ce que** l'on interrompt l'opération de re-serrage, lorsque la course de re-serrage parcourue par le piston de frein (6) dépasse une valeur limite associée.

3. Procédé selon la revendication 1 ou 2, **caractérisé en ce que** la valeur limite associée au courant du moteur correspond à un pic de courant d'enclenchement lors de l'enclenchement du moteur de frein (3).

4. Procédé selon la revendication 3, **caractérisé en ce que** la valeur limite associée au courant du moteur correspond au pic de courant d'enclenchement lors de l'opération de re-serrage.

5. Procédé selon l'une quelconque des revendications 1 à 4, **caractérisé en ce que** l'on produit un signal de défaut, dans le cas où la force de serrage de consigne désirée ne peut pas être produite uniquement au moyen du moteur de frein électrique (3) et qu'il n'existe pas de force de serrage additionnelle ou que celle-ci n'est pas suffisante.

6. Procédé selon la revendication 5, **caractérisé en ce que** l'on exerce la surveillance de la pression hydraulique dans un appareil de commande ESP (Programme de stabilisation électronique).

7. Procédé selon la revendication 5 ou 6, **caractérisé en ce que** l'on exerce la surveillance de la pression hydraulique pendant l'opération de re-serrage.

8. Procédé selon la revendication 7, **caractérisé en ce qu'**il n'existe pas ou pas de pression hydraulique suffisante, lorsque le gradient du courant du moteur du moteur de frein électrique (3) dépasse une valeur limite associée.

9. Procédé selon l'une quelconque des revendications 1 à 8, **caractérisé en ce que** l'on exécute l'opération de re-serrage en fonction de la température du disque de frein.

10. Procédé selon l'une quelconque des revendications 1 à 9, **caractérisé en ce qu'**après la fin d'une opération de serrage on surveille le déplacement du véhicule pendant un intervalle de temps défini et on lance une opération de re-serrage lorsque le véhicule se met à rouler librement.

11. Appareil de régulation ou de commande pour la mise en oeuvre du procédé selon l'une quelconque des revendications 1 à 10.

12. Frein de stationnement dans un véhicule doté d'un appareil de régulation ou de commande selon la revendication 11.
